# EUROPEAN PATENT APPLICATION

(11) **EP 2 672 703 A1**
(43) Date of publication of application: **11.12.2013**
(21) Application number: 13162974.3
(22) Date of filing: 09.04.2013
(51) Int. Cl.: H04N 5/76, H04N 5/445

(54) **Display apparatus and method for displaying**

(30) Priority: 07.06.2012 KR 20120061095
(71) Applicant: Samsung Electronics Co., Ltd, Gyeonggi-do 443-742 (KR)
(72) Inventor: Kim, Mun-seok, Seoul (KR)
(74) Representative: Instone, Terry

(57) **Abstract**

A display apparatus and method thereof are provided, in which the display apparatus includes a storage device which stores an application, an input device which receives on-timer information relating to an automatic execution of the application, and a controller which automatically executes the application based on the on-timer information and which controls a display device to display a screen relating to the automatically-executed application. Accordingly, the display apparatus can automatically execute at least one application from among a plurality of previously-stored applications at the time requested by the user.

## Description

### BACKGROUND

### Field

Devices and methods provided herein relate to displaying, and more particularly, to a display apparatus and a method thereof for executing downloaded applications automatically.

### Description of the Related Art

As display apparatuses implementing the Internet, such as the smart television (TV), are widely provided, the contents provided from the broadcasters from all over the world are utilized more easily. In particular, the display apparatuses such as the smart TVs download and store applications for executing various contents, such as, for example, movies, music, or games, upon user request. A given display apparatus executes an application which is selected by the user from among the previously-stored applications and provides the content which relates to the selected application.

More particularly, the display apparatus downloads and stores respective applications which relate to various contents. The user can search the stored applications in the display apparatus and select to execute an application which relates to the particular content that he or she wishes to use.

Because the conventional display apparatus executes applications only upon request by a user for the execution of applications, the user has an inconvenience of having to search and select an application from among applications stored in the display apparatus each time in order to run the downloaded application. Accordingly, a method is necessary which enables automatic access to and utilization of various applications stored in the display apparatus.

### SUMMARY

According to the present invention there is provided an apparatus and method as set forth in the appended claims. Other features of the invention will be apparent from the dependent claims, and the description which follows.

Exemplary embodiments overcome the above-described disadvantages and other disadvantages not described above. Further, the exemplary embodiments are not required to overcome the disadvantages described above, and an exemplary embodiment may not overcome any of the problems described above.

According to one exemplary embodiment, a display apparatus is provided. The display apparatus may include a storage device which stores an application, an input device which receives on-timer information relating to an automatic execution of the application, and a controller which automatically executes the application based on the on-timer information and which controls a display device to display a screen relating to the automatically-executed application.

When the on-timer information is received via the input device, the controller may match the received on-timer information with identification information relating to the application and store a result of the match.

If the display apparatus is in an inactive state, the controller may power on the display apparatus and control such that the application is executed.

The controller may control such that the application is executed before a predetermined time for executing the application according to the on-timer information received via the input device.

The controller may control to cause a display of a notice message relating to the executing of the application at a predetermined time for executing the application according to the on-timer information received via the input device.

The input device may receive expiry date information relating to an automatic deletion of the application, and the controller may automatically delete the application stored in the storage device based on the received expiry date information.

The input device may receive at least one information from among position information and size information relating to the screen relating to the executed application, and the controller may adjust at least one of a position and a size of the screen relating to the executed application based on the received at least one of the position information and the size information.

In one exemplary embodiment, a display method which is executable by using a display apparatus for automatically executing an application is provided, which display method may include receiving on-timer information relating to an automatic execution of the application, automatically executing the application based on the received on-timer information, and displaying a screen relating to the automatically-executed application.

When the on-timer information is received, the method may further include matching the received on-timer information with identification information relating to the application and storing a result of the matching.

The executing may include, if the display apparatus is in inactive state, powering on the display apparatus and executing the application.

The executing may include executing the application before a predetermined time for executing the application according to the received on-timer information.

The executing may include generating a notice message relating to the executing of the application before a predetermined time for executing the application according to the received on-timer information, and the displaying may include displaying the generated notice message.

The receiving may include receiving expiry date information relating to an automatic deletion of the application, and the executing may include automatically deleting the application based on the expiry date information.

The receiving may include receiving at least one information from among position information and size information relating to the screen relating to the executed application, and the executing may include adjusting at least one of a position and a size of the screen relating to the executed application based on the received at least one of the position information and the size information.

In various exemplary embodiments, the display apparatus can automatically execute at least one of a plurality of applications, at a time corresponding to on-timer information received from a user. As a result, the user can have improved access to and utilization of the various applications stored at the display apparatus.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram of a display apparatus according to an exemplary embodiment;
FIG. 2 is a view which illustrates an example of automatically executing an application at a predetermined time based on on-timer information provided from a display apparatus according to an exemplary embodiment;
FIG. 3 is a view which illustrates an example of announcing an automatic execution of an application at a predetermined time based on on-timer information provided from a display apparatus according to an exemplary embodiment;
FIG. 4 is a view which illustrates an example of displaying content relating to an application which is executed automatically at a predetermined time which corresponds to on-timer information provided from a display apparatus according to an exemplary embodiment; and
FIG. 5 is a flowchart which illustrates a method for executing an application automatically at a predetermined time which corresponds to on-timer information provided from a display apparatus according to an exemplary embodiment.

### DETAILED DESCRIPTION OF EXEMPLARY EMBODIMENTS

Certain exemplary embodiments will now be described in greater detail with reference to accompanying drawings.

In the following description, same drawing reference numerals are used for the same elements even in different drawings. The matters defined in the description, such as detailed construction and elements, are provided to assist in a comprehensive understanding of the exemplary embodiments. Accordingly, it is apparent that the exemplary embodiments can be carried out without those specifically defined matters. In addition, well-known functions or constructions are not described in detail since they would obscure the present disclosure with unnecessary detail.

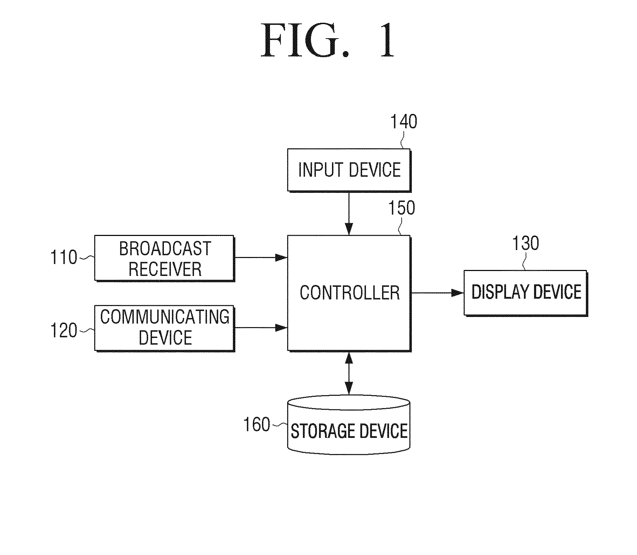

FIG. 1 is a block diagram of a display apparatus according to an exemplary embodiment.

Referring to FIG. 1, the display apparatus may include a broadcast receiver 110, a communicating device 120, a display device 130, an input device 140, a controller 150, and a storage device 160.

The broadcast receiver 110 may receive broadcast signals from an input terminal of the display apparatus. In particular, the broadcast receiver 110 may include a receiving module (not illustrated) which receives satellite, cable, and/or terrestrial broadcast signals from an external broadcast transmitting device, and video signals from a terminal device such as a digital versatile disk (DVD), a game console or personal video recorder (PVR), and a tuning unit (not illustrated) which tunes the received video signals. The communicating device 120 may communicate with the external device which provides applications via a network, and may download applications provided from the external device. As used herein, the term "application" may refer to any software program for utilizing movies, music, news or games.

Accordingly, when an application provided by an external apparatus is downloaded through the communicating device 120, the storage device 160 may store the downloaded application. Such a storage device 160 which stores downloaded applications may be realized as a non-volatile memory such a flash memory. Meanwhile, the storage device 160 according to an exemplary embodiment may store not only a downloaded application but also an application set by a manufacturer.. The display device 130 displays an image signal received through the broadcast receiver 110 or an execution screen of at least one application from among a plurality of applications stored in the storage device 160 under a control command of the controller 150.

The input device 140 may receive user request information relating to downloading an application provided from the external device, and may also receive on-timer information relating to an automatic execution of an application which are stored in the storage device 160. The on-timer information may include time information relating to an automatic execution of at least one of a plurality of applications stored in the storage device 160, such as, for example, a predetermined time for automatically executing the application. However, an exemplary embodiment may not be limited to herein. Accordingly, the on-timer information received via the input device 140 may also include information relating to powering the display apparatus on or off or changing channels or any other type of information which is relevant to the execution of the at least one application.

The controller 150 may automatically execute the stored application of the storage device 160 based on the on-timer information received via the input device 140 and control the display device 130 to display the screen relating to the executed application. If the on-timer information which relates to an execution of at least one application from among the plurality of stored applications at the storage device 160 is received via the input device 140, the controller 150 may match the received on-timer information with application identification information relating to the at least one application and stores a result of the match in the storage device 160. Accordingly, the controller 150 may automatically execute the application at a predetermined time which corresponds to the stored on-timer information that matches with the application identification information.

According to an exemplary embodiment, the user may input the on-timer information via the input device 140 in order to cause an automatic execution of at least one application from among a plurality of stored applications which are stored in the storage device 160. If the on-timer information is received, the controller 150 may automatically match the received on-timer information with the identification information of the application to be executed based on the on-timer information and store the same in the storage device 160. By way of example, if the on-timer information is received, and the received on-timer information includes an indication relating to an automatic execution of a third application from among a first application, a second application, and so forth, up to a ninth application, at a predetermined time and date of 12:00, 05/05/2012, the controller 150 may match the received on-timer information with the identification information relating to the third application and store the same in the storage device 160. Accordingly, at 12:00 on 05/05/2012, the controller 150 may automatically execute the third application from among the first to ninth applications which are stored in the storage device 160.

Accordingly, the display device 130 may display a screen relating to the third application which is executed by the controller 150, thus providing the user with content which relates to the third application at the predetermined time and date as indicated in the on-timer information provided by the user.

As described above, the controller 150 may automatically execute an application based on the on-timer information. If the display apparatus is in an inactive state, the controller 150 may power on the display apparatus and automatically execute the application as indicated by the on-timer information.

In particular, the controller 150 may analyze the on-timer information which has been matched with the respective applications and stored in the storage device 160, to check whether there is an application which is scheduled to be automatically executed. If the checking indicates the presence of an application which is scheduled to be automatically executed, the controller 150 may determine whether the display apparatus is in an active state or an inactive state, i.e., whether the display apparatus is powered on or powered off.

If the determining indicates that the display apparatus is powered on, the controller 150 may automatically execute the application at the predetermined time corresponding to the respective on-timer information. Accordingly, the display device 130 may display a screen which relates to the application which has been automatically executed by the controller 150. Conversely, if the determining indicates that the display apparatus is powered off, the controller 150 may power on the display apparatus before automatically executing the respective application at the predetermined time indicated by the corresponding on-timer information. After powering on the display apparatus, the controller 150 may automatically execute the respective application at the predetermined time indicated by the corresponding on-timer information. Accordingly, the display device 130 may display a screen relating to the respective application as a result of automatically executing the application by using the controller 150.

In checking whether the display apparatus is activated or deactivated and automatically executing an application at the predetermined time which corresponds to the on-timer information, the controller 150 may preferably control such that an execution of the corresponding application begins before the time indicated by the on-timer information. To execute an application which are stored in the storage device 160 and display the content relating to the application, additional time is generally consumed in order to begin execution of the application. If an application which corresponds to the on-timer information is executed exactly at the time corresponding to the on-timer information, there may be a delay which occurs prior to a time at which the content relating to the application is actually displayed on a screen.

In one exemplary embodiment, the controller 150 may execute an application corresponding to the on-timer information before the predetermined time for executing the application that corresponds to the on-timer information such that the content relating to the application is instantly displayed on the screen at the predetermined time for executing the application that corresponds to the on-timer information.

According to another exemplary embodiment, the controller 150 may control to cause a display of a notice message relating to the execution of an application is displayed before a predetermined time for executing the application which corresponds to the on-timer information received from the input device 140. By way of example, the user may input the on-timer information so that one of the plurality of applications stored in the storage device 160 is scheduled to be automatically executed at the time and date of 12:00, 05/05/2012. According to the on-timer information as inputted and received, the controller 150 may generate a notice message at 11:59, 05/05/2012, thereby providing information relating to the application which is scheduled to be executed automatically. The display device 130 may display the notice message on the screen, and from the notice message (also referred to herein as a "forecast message"), the user understands that the application will be automatically executed as scheduled by the user. Additionally, the user may determine whether he or she will continue to watch the currently displaying broadcast program or whether he or she will be provided with the content relating to the application which is scheduled to be automatically executed.

In addition, the input device 140 may further receive expiry date information relating to an automatic deletion of the application stored in the storage device 160. If the expiry date information is received, the controller 150 may automatically delete the application stored in the storage device 160 based on the expiry date information. In particular, the user may input the expiry date information to cause a deletion of at least one application from among the plurality of applications stored in the storage device 160 based on a predetermined schedule. If the expiry date information is received via the input device 140, the controller 150 may match the expiry date information with the application identification information and store a result of the match in the storage device 160. After that, the controller 150 may delete an application relating to the expiry date information on the date that corresponds to the expiry date information. Accordingly, the user convenience improves, because the user is not required to search applications one by one and delete one or more respective applications as he or she deems the respective applications unnecessary.

In addition, the input device 140 may further receive at least one from among position information and size information relating to the screen showing the application being executed. The controller 150 may adjust the position and/or the size of the screen showing the application being executed, based on the at least one of the position information and the size information received via the input device 140.

In particular, the user may input at least one information from among the position information and the size information, relating to at least one of the plurality of applications stored in the storage device 160. If at least one of the position information and the size information is inputted and received, the controller 150 may match the received information with the corresponding application identification information and store a result of the match. The application which matches with at least one of the position information and the size information may be also matched with the corresponding on-timer information relating to an automatic execution of the application, based on the user's request.

Accordingly, the controller 150 may control the position and/or the size of the screen showing the executing application based on the information matched with the application identification information when the application relating to the on-timer information is automatically executing at a predetermined time corresponding to the on-timer information. According to an exemplary embodiment, the identification information relating to at least one application from among the plurality of applications stored in the storage device 160 may be matched and stored with the corresponding on-timer information set by the user and the corresponding size information. On the date corresponding to the on-timer information, the controller 150 may adjust the size of the screen on which the application is automatically executed, based on the size information. By way of example, if the size information indicates that the size shall be reduced by half, the controller 150 may reduce a size of the screen relating to the automatically-executed application to a half of its previous size. If the size of the screen relating to the automatically-executed application is reduced by half, the display device 130 may display the screen relating to the automatically-executed application in the reduced size.

According to another exemplary embodiment, the identification information relating to at least one of the plurality of applications stored in the storage device 160 may be matched and stored with the corresponding on-timer information set by the user, the corresponding size information, and the corresponding position information. At the predetermined time corresponding to the on-timer information, the controller 150 may automatically execute an application which corresponds to the on-timer information. At this time, the controller 150 may adjust the size of the screen relating to the automatically-executed application based on the corresponding size information. The controller 150 may then control the display device 130 to display the application executing screen based on the corresponding position information. By way of example, if the size information indicates that the size shall be reduced to one fourth of its previous size, and if the position information indicates that the position shall be on the upper right side portion of the screen, the controller 150 may reduce the size of the screen relating to the automatically-executed application size to one fourth of its previous size, and control the display device 130 to display the screen relating to the automatically-executed application for which the size has been reduced to one fourth of its previous size on the upper right side portion of the screen. Accordingly, the display device 130 may display the screen relating to the automatically-executed application for which the size has been reduced to one fourth of its previous size on the upper right side portion of the screen.

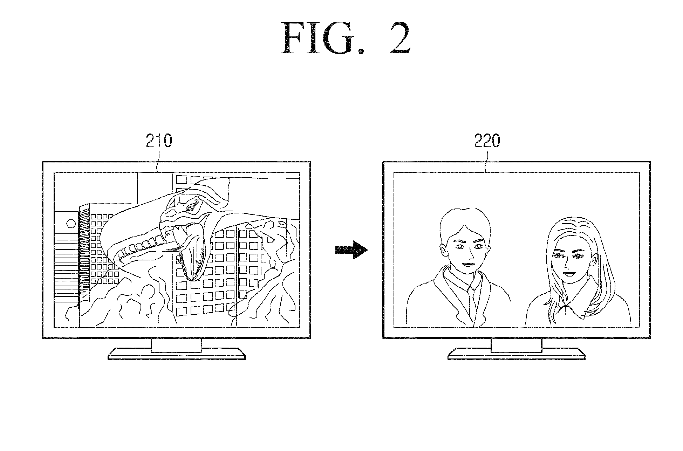

The respective components of the display apparatus according to an exemplary embodiment have been described above. By referring to FIGS. 2, 3, and 4, the operations for automatically executing a respective application at a predetermined time which corresponds to the on-timer information at the display apparatus will be described in detail below.

FIG. 2 is a view which illustrates an example of automatically executing application at a predetermined time based on the on-timer information at the display apparatus.

Referring to FIG. 2, the user may request that at least one application be automatically executed from among a plurality of applications which are stored in the storage device 160 of the display apparatus. By way of example, the user may input on-timer information which indicates that an application for providing the cultural content 220, from among the plurality of applications, is scheduled to be automatically executed at the time and date of 12:00, 05/05/2012. If the on-timer information is inputted and received, the controller 150 may match the received on-timer information with the identification information relating to the application for providing the cultural content 220 from among the plurality of applications stored in the storage device 160, and store a result of the match.

Accordingly, the controller 150 may automatically execute the application for providing the cultural content 220 at 12:00 on 05/05/2012 in accordance with the on-timer information stored in the storage device 160.

In particular, the display apparatus may, as illustrated in FIG. 2, display a video 210 which has been provided from an exterior broadcast transmitting device via the display device 130. While displaying the video 210, the controller 150 may analyze the on-timer information matched with the respective applications stored in the storage device 160, read out the on-timer information corresponding to current time and date, and automatically execute an application which corresponds to the read on-timer information. If an application relating to the on-timer information provided by the user is executed, the display device 130 may display a screen relating to the automatically-executed application. Accordingly, while displaying the video 210 provided from the exterior broadcast transmitting device via the display device 130, the display apparatus may automatically execute the application relating to the read on-timer information and display the cultural content 220 which relates to the corresponding application when the predetermined time for executing the application as indicated by the on-timer information arrives.

In summary, the display apparatus may automatically execute at least one application from among the plurality of pre-stored applications at a predetermined time which corresponds to the on-timer information provided by the user. Accordingly, the user is provided with the content relating to the pre-stored application at the time and date which corresponds to the on-timer information provided by the user.

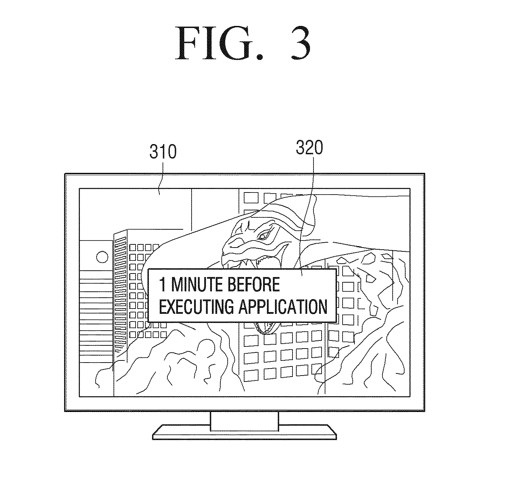

FIG. 3 is a view which illustrates an example of providing an announcement relating to an upcoming automatic execution of application at the predetermined time that corresponds to the on-timer information at the display apparatus according to an exemplary embodiment.

Referring to FIG. 3, the user may request an automatic execution of at least one of the plurality of applications which is stored in the storage device 160 of the display apparatus. As described above with reference to FIG. 2, the user may input the on-timer information in order to cause an automatically execution of the application which provides the cultural content 220 from among the plurality of applications at 12:00, 05/05/2012. When the on-timer information is received, the controller 150 may match the received on-timer information with the identification information relating to the application which provides the cultural content 220 from among the plurality of applications stored in the storage device 160, and store a result of the match.

The controller 150 may automatically execute the application which provides the cultural content 220 at the predetermined time which corresponds to the on-timer information stored in the storage device 160, i.e., at 12:00 on 05/05/2012. The controller 150, which automatically executes the application relating to the on-timer information at the predetermined time which corresponds to the on-timer information, may generate a notice message 320 which includes information relating to the forthcoming automatic execution of application before automatically executing the application. By way of example, the controller 150 may generate a notice message 320 at 11:59 on 05/05/2012 in order to inform a user that the application will be started automatically.

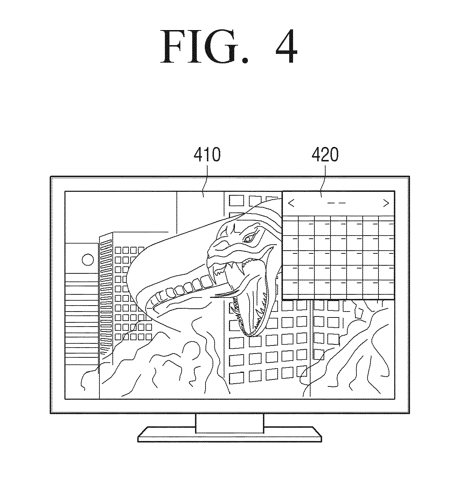

If the notice message 320 is generated, the display apparatus may display the notice message 320 "1 minute before executing application", in conjunction with a video 310 provided from the exterior broadcast transmitting device via the display device 130. Accordingly, the user understands that the application will be automatically executed as scheduled by the user, and therefore, the user is given an opportunity to determine whether to continue watching the video 310 or to be provided with the content relating to the application to be automatically executed. FIG. 4 is a view which illustrates an example of displaying the content relating to the application which is being automatically executed at the predetermined time which corresponds to the on-timer information on the screen of the display apparatus.

Referring to FIG. 4, the user may request an automatic execution of at least one application from among the plurality of applications which are stored in the storage device 160 of the display apparatus. By way of example, the user may input the on-timer information in order to cause an automatic execution of an application which provides schedule organizing content 420 from among the plurality of applications at 7:00 a.m. every day. Further, the user may input size information and position information such that the content 420 is displayed in a size which is reduced to one eighth of a size of the full screen and in a position which is located on the upper right side portion of the screen. If the on-timer information, the size information and the position information are inputted and received, the controller 150 may match the received on-timer information, the received size information and the received position information with identification information relating to the application which provides the schedule organizing content 420 from among the plurality of applications stored in the storage device 160 and store a result of the match.

The controller 150 may automatically execute the application which provides the schedule organizing content 420 at the predetermined time corresponding to the on-timer information stored in the storage device 160, i.e., at 7 a.m., every day. The controller 150 may control such that the screen relating to the automatically-executed application is reduced to one eighth of the full screen size, and may control the display device 130 to display the screen relating to the automatically-executed application on the upper right side portion of the screen.

The display device 130 may display the application executing screen for which the size has been reduced to one eighth of the full screen size and on the upper right side portion of the screen, in conjunction with a video 410 which has been provided from an exterior broadcast transmitting device. Accordingly, the user may check the day's schedule with reference to the schedule organizing content 420 which is displayed on the upper right side portion of the display apparatus at 7 a.m. every day.

Several exemplary embodiments relating to the automatic execution of an application at a predetermined time which corresponds to respective on-timer information by the display apparatus have been described above. Hereinbelow, a method for automatically executing an application at a predetermined time which corresponds to respective on-timer information by the display apparatus according to an exemplary embodiment will be described in detail below.

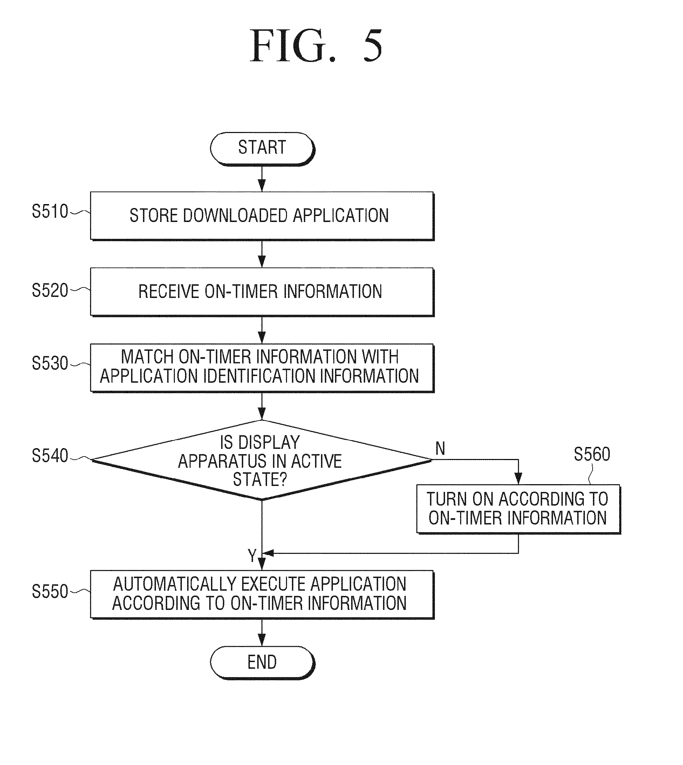

FIG. 5 is a flowchart which illustrates a method for automatically executing an application at a predetermined time which corresponds to respective on-timer information by the display apparatus according to an exemplary embodiment.

Referring to FIG. 5, the display apparatus may perform the data communication with an exterior device which provides applications via a network and receive an application upon a user's request. In operation S510, the display apparatus may download the received application and store the downloaded application in the storage device.

As such, a storage device which stores downloaded applications may store not only a downloaded application but also an application preset by a manufacturer upon a user's request.

At operation S520, while a plurality of applications are stored in the storage device, the user may input on-timer information in order to cause an automatic execution of at least one application from among the plurality of applications stored in the storage device, and the display apparatus may receive the on-timer information. At operation S530, when the on-timer information is received, the display apparatus may match and store the on-timer information in conjunction with the identification information relating to the application requested by the user.

After the on-timer information inputted by the user has been received and matched with the corresponding identification information relating to the at least one application from among the plurality of applications, the display apparatus may automatically execute the application relating to the on-timer information based on the on-timer information. In particular, the display apparatus may analyze the stored on-timer information which is matched with respective applications, and check whether there is an application which is scheduled to be automatically executed. At operation S540, if the checking indicates that there is an application which is scheduled to be automatically executed, the display apparatus may check whether the display apparatus is currently in an active state or an inactive state. In particular, the display apparatus may determine whether the display apparatus is powered on or powered off.

If the checking indicates that the display apparatus is powered on (i.e., the result of operation S540 is "Yes" or "Y"), then at operation S550, the display apparatus may automatically execute the respective application at the predetermined time which corresponds to the on-timer information. Conversely, if the checking indicates that the display apparatus is powered off (i.e., the result of operation S540 is "No" or "N"), then at operation S560, the display apparatus may turn on or power on before automatically executing the respective application at the predetermined time which corresponds to the on-timer information. At operation S550, the display apparatus may automatically execute the respective application at the predetermined time which corresponds to the on-timer information.

In summary, the display apparatus may determine the active or inactive status of the display apparatus, and if inactive, the display apparatus may power on and thereby change the status to active status in order to be able to automatically execute the respective application relating to the on-timer information at the predetermined time which corresponds to the on-timer information.

Accordingly, the display apparatus can automatically execute the application relating to the on-timer information at the predetermined time which corresponds to the on-timer information, and may also automatically execute the application before the predetermined time. By automatically executing the application relating to the on-timer information before the predetermined time which corresponds to the on-timer information, the display apparatus may instantly display the content relating to the application on the screen at the predetermined time which corresponds to the on-timer information.

In addition, according to another exemplary embodiment, the display apparatus may control such that a notice message is displayed regarding the upcoming automatic execution of an application, before the predetermined time which corresponds to the on-timer information received from the user. Because the display apparatus may display the notice message regarding the forthcoming application execution before the predetermined time which corresponds to the on-timer information, the user can understand that the application will be automatically executed as scheduled by the user. Furthermore, upon watching the forecast message, the user may determine whether to continuously watch the currently displayed video or to be provided with the content relating to the application which is scheduled to be automatically executed. Because the operation of displaying the notice message is described in detail above with reference to FIG. 3, this will not be additionally described below for the sake of brevity.

In addition, in conjunction with operation S520, the display apparatus may further receive from the user expiry date information relating to an automatic deletion of the respective application. If the expiry date information is received, the display apparatus may automatically delete the respective application which is stored in the storage device based on the received expiry date information. In particular, if the received expiry date information indicates a time point at which to automatically delete the application, the display apparatus may match the received expiry date information with corresponding application identification information and store the same in the storage device. The display apparatus may delete an application relating to the expiry date information on the date corresponding to the expiry date information. Accordingly, user convenience improves, because unnecessary applications are automatically deleted without a necessity for the user to search and delete the unnecessary applications stored in the storage device one by one.

In addition, in conjunction with operation S520, the display apparatus may further receive at least one information from among position information and size information relating to the application executing screen. If at least one of the position information and the size information relating to the application executing screen is received from the user, the display apparatus may adjust at least one of the size and the position of the application executing screen based on the received information.

In particular, the user may input at least one of the position information and the size information relating to at least one application from among the plurality of applications stored in the storage. If at least one of the position and the size information is received, the display apparatus may match the received information with corresponding application identification information and store the same. More particularly, the application identified in the application identification information which is matched with the at least one of the position and the size information may also be matched with the received on-timer information in order to be automatically executed by the user's request.

Accordingly, the display apparatus may control the position or the size of an application executing screen based on the information matched with application identification information when automatically executing based on the predetermined time for executing the application according to the on-timer information. The operation for controlling the position or the size of the application executing screen based on the user's request at the display apparatus has been described in detail above by referring to FIGS. 1 and 4, and thus will not be additionally described herein for the sake of brevity.

In an exemplary embodiment, a program and/or a code for performing the above-described methods may be stored on various types of terminal-readable recording media such as a random access memory (RAM), a flash memory, a read only memory (ROM), an erasable programmable ROM (EPROM), an electronically erasable and programmable ROM (EEPROM), a register, a hard disk, a removable disk, a memory card, a USB memory, a CD-ROM, an/or any other suitable non-transitory or transitory medium.

The foregoing exemplary embodiments and advantages are merely exemplary and are not to be construed as limiting. The present teaching can be readily applied to other types of apparatuses. Further, the description of the exemplary embodiments is intended to be illustrative, and not to limit the scope of the claims, and many alternatives, modifications, and variations will be apparent to those skilled in art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus, comprising:
a storage unit which stores an application;
an input unit which receives on-timer information relating to an automatic execution of the application; and
a control unit which automatically executes the application based on the on-timer information and which controls a display unit to display a screen of the automatically-executed application.

2. The display apparatus of claim 1, wherein, when the on-timer information relating to the application is received via the input unit, the control unit matches the received on-timer information with identification information relating to the application and stores a result of the match.

3. The display apparatus of claim 1 or 2, wherein, if the display apparatus is in an inactive state, the control unit turns on the display apparatus and controls so that the application is executed.

4. The display apparatus of any of claims 1 to 3, wherein the control unit controls so that the application is executed before a predetermined time to execute the application according to the on-timer information received via the input unit.

5. The display apparatus of any of claims 1 to 4, wherein the control unit controls so that a notice message is displayed regarding the executing of the application before a predetermined time to execute the application according to the on-timer information received via the input unit.

6. The display apparatus of claim 5, wherein the input unit additionally receives expiry date information relating to an automatic deletion of the application, and the control unit automatically deletes the application stored in the storage unit based on the expiry date information.

7. The display apparatus of claim 5 or 6, wherein the input unit additionally receives at least one information from among position information and size information regarding the screen of the executed application, and the control unit adjusts at least one of a position and a size of the screen of the executed application based on the received at least one of the position information and the size information.

8. A display method of a display apparatus for automatically executing an application, the display method comprising:
receiving on-timer information relating to an automatic execution of the application;
automatically executing the application based on the on-timer information; and
displaying a screen of the automatically-executed application.

9. The display method of claim 8, further comprising, when the on-timer information relating to the application is received, matching the received on-timer information with identification information relating to the application and storing a result of the matching.

10. The display method of claim 8 or 9, wherein the executing comprises, if the display apparatus is in inactive state, turning on the display apparatus and executing the application.

11. The display method of any of claims 8 to 10, wherein the executing comprises executing the application before a predetermined time to execute the application according to the received on-timer information.

12. The display method of any of claims 8 to 11, wherein the executing comprises generating a notice message regarding the executing of the application before a predetermined time to execute the application according to the on-timer information, and
the displaying comprises displaying the generated notice message.

13. The display method of claim 12, wherein the receiving comprises additionally receiving expiry date information relating to an automatic deletion of the application; and
the executing comprises automatically deleting the application based on the expiry date information.

14. The display method of claim 12 or 13, wherein the receiving comprises additionally receiving at least one information from among position information and size information regarding the screen of the executed application; and
the executing comprises adjusting at least one of a position and a size of the screen of the executed application based on the received at least one of the position information and the size information.
